# EUROPEAN PATENT APPLICATION

(11) **EP 4 265 472 A1**
(43) Date of publication of application: **25.10.2023**
(21) Application number: 23168596.7
(22) Date of filing: 18.04.2023
(51) Int. Cl.: B60L 53/80, B60S 5/06, B60L 53/30, B60L 53/60, H02P 29/62

(54) **CONTROL METHOD AND SYSTEM FOR BATTERY CHARGING AND SWAP STATION, MEDIUM, APPARATUS, AND BATTERY CHARGING AND SWAP STATION**

(30) Priority: 19.04.2022 CN 202210412342
(71) Applicant: Nio Technology (Anhui) Co., Ltd, Hefei City, Anhui 230601 (CN)
(72) Inventor: XU, Huazhen, Shanghai, 201805 (CN); ZHENG, Feifei, Shanghai, 201805 (CN); WANG, Shuai, Shanghai, 201805 (CN); LI, Zhibin, Shanghai, 201805 (CN); ZOU, Jiyong, Shanghai, 201805 (CN); LIU, Tao, Shanghai, 201805 (CN); LUO, Jianglong, Shanghai, 201805 (CN)
(74) Representative: Vossius & Partner Patentanwälte Rechtsanwälte mbB

(57) **Abstract**

The disclosure relates to the technical field of battery charging and swapping, and in particular, to a control method and system for a battery charging and swap station, a medium, an apparatus, and a battery charging and swap station. The disclosure is intended to solve the problem that a battery charging and swap station is prone to false alarm and halt at a low temperature. To this purpose, the battery charging and swap station in the disclosure includes a battery swap apparatus. The battery swap apparatus includes a locking/unlocking mechanism. The locking/unlocking mechanism is configured to be capable of locking and unlocking a battery locking mechanism through rotation of a locking/unlocking head of the locking/unlocking mechanism. The control method for a battery charging and swap station includes: obtaining an internal temperature of the battery charging and swap station; comparing the internal temperature with a preset temperature threshold; and controlling, based on a comparison result, the locking/unlocking mechanism to or not to alternately rotate forward and backward. In the disclosure, the locking/unlocking mechanism can be preheated at a low temperature, thereby ensuring running efficiency of the locking/unlocking mechanism and avoiding frequent false alarm and halt at a low temperature.

## Description

### Technical Field

The disclosure relates to the technical field of battery charging and swapping, and in particular, to a control method and system for a battery charging and swap station, a medium, an apparatus, and a battery charging and swap station.

### Background Art

With the rapid development of the electric vehicle industry, the industry focuses on rapid energy replenishment of a discharged battery. As an important energy replenishment measure, a battery swap solution is favored by wide users due to features such as a short battery swap process and little damage to a battery.

The battery swap solution needs to be performed in a battery charging and swap station. A temperature in the battery charging and swap station affects proper operation of a battery swap apparatus. In cold winter or cold regions, a low temperature increases a running torque of a servo motor of the battery swap apparatus. An excessively large running torque of the servo motor results in abnormal false alarms and shutdown of the battery charging and swap station. Frequent abnormal false alarms affect battery swap efficiency and even affects user experience.

Accordingly, there is a need for a new technical solution to solve the problem described above.

### Summary

To solve the above at least one problem in the prior art that a battery charging and swap station is prone to false alarm and halt at a low temperature, the disclosure provides a control method for a battery charging and swap station. The battery charging and swap station includes a battery swap apparatus. The battery swap apparatus includes a locking/unlocking mechanism. The locking/unlocking mechanism is configured to be capable of locking and unlocking a battery locking mechanism through rotation of a locking/unlocking head of the locking/unlocking mechanism. The control method for a battery charging and swap station includes:
obtaining an internal temperature of the battery charging and swap station;
comparing the internal temperature with a preset temperature threshold; and
controlling, depending on a comparison result, the locking/unlocking mechanism to or not to alternately rotate forward and backward.

In a preferred technical solution of the above control method for a battery charging and swap station, the step of "controlling, depending on a comparison result, the locking/unlocking mechanism to or not to alternately rotate forward and backward" further includes:
when the internal temperature is less than the preset temperature threshold, determining whether an authentication success signal of a vehicle with a battery to be swapped is received; and
when the authentication success signal is received, controlling the locking/unlocking mechanism to alternately rotate forward and backward.

In a preferred technical solution of the above control method for a battery charging and swap station, the step of "controlling, depending on a comparison result, the locking/unlocking mechanism to or not to alternately rotate forward and backward" further includes:
when the internal temperature is greater than or equal to the preset temperature threshold, or when the internal temperature is less than the preset temperature threshold and the authentication success signal is not received, controlling the locking/unlocking mechanism to keep a current state.

In a preferred technical solution of the above control method for a battery charging and swap station, the step of "controlling the locking/unlocking mechanism to alternately rotate forward and backward" further includes:
controlling the locking/unlocking mechanism to alternately rotate forward and backward at a preset torque and a preset rotational speed.

In a preferred technical solution of the above control method for a battery charging and swap station, after the step of "controlling the locking/unlocking mechanism to alternately rotate forward and backward", the control method further includes:
determining whether a preset rotation stopping condition is met; and
when the rotation stopping condition is met, controlling the locking/unlocking mechanism to stop rotation.

In a preferred technical solution of the above control method for a battery charging and swap station, the rotation stopping condition includes at least one of the following conditions:
the internal temperature of the battery charging and swap station is greater than or equal to the preset temperature threshold; or
a battery swap start signal is received.

In a preferred technical solution of the above control method for a battery charging and swap station, the battery charging and swap station further includes a centering apparatus. The centering apparatus is configured to be capable of performing a centering operation on a vehicle with a battery to be swapped. The control method further includes:
after the internal temperature is less than the preset temperature threshold and the centering apparatus is started, obtaining a no-load running torque of the centering apparatus; and
increasing a no-load torque alarm threshold depending on the no-load running torque.

In a preferred technical solution of the above control method for a battery charging and swap station, the step of "obtaining a no-load running torque of the centering apparatus" further includes:
obtaining a plurality of no-load running torques of the centering apparatus after the centering apparatus is started; and
the step of "increasing a no-load torque alarm threshold depending on the no-load running torque" further comprises:
   calculating an average torque based on the plurality of no-load running torques;
   comparing the average torque with a preset torque threshold; and
   increasing the no-load torque alarm threshold depending on a comparison result,
   wherein the preset torque threshold is less than the no-load torque alarm threshold.

In a preferred technical solution of the above control method for a battery charging and swap station, the step of "increasing the no-load torque alarm threshold depending on a comparison result" further includes:
if the average torque is greater than or equal to the preset torque threshold, increasing the no-load torque alarm threshold; or
if the average torque is less than the preset torque threshold, maintaining the no-load torque alarm threshold.

In a preferred technical solution of the above control method for a battery charging and swap station, the step of "calculating an average torque based on the plurality of no-load running torques" further includes:
selecting, from the plurality of no-load running torques, a no-load running torque within a preset time period after the centering apparatus is started; and
calculating the average torque based on the selected no-load running torque.

The disclosure further provides a control system for a battery charging and swap station. The battery charging and swap station includes a battery swap apparatus. The battery swap apparatus includes a locking/unlocking mechanism. The locking/unlocking mechanism is configured to be capable of locking and unlocking a battery locking mechanism through rotation of a locking/unlocking head of the locking/unlocking mechanism. The control system for a battery charging and swap station includes:
an obtaining module, where the obtaining module is configured to obtain an internal temperature of the battery charging and swap station;
a comparison module, where the comparison module is configured to compare the internal temperature with a preset temperature threshold; and
a control module, where the control module is configured to control, depending on a comparison result, the locking/unlocking mechanism to or not to alternately rotate forward and backward.

In a preferred technical solution of the above control system for a battery charging and swap station, the control module is further configured to control, depending on a comparison result, the locking/unlocking mechanism to or not to alternately rotate forward and backward in the following manner:
when the internal temperature is less than the preset temperature threshold, determining whether an authentication success signal of a vehicle with a battery to be swapped is received; and
when the authentication success signal is received, controlling the locking/unlocking mechanism to alternately rotate forward and backward.

In a preferred technical solution of the above control system for a battery charging and swap station, the control module is further configured to control, depending on a comparison result, the locking/unlocking mechanism to or not to alternately rotate forward and backward in the following manner:
when the internal temperature is greater than or equal to the preset temperature threshold, or when the internal temperature is less than the preset temperature threshold and the authentication success signal is not received, controlling the locking/unlocking mechanism to keep a current state.

In a preferred technical solution of the above control system for a battery charging and swap station, the control module is further configured to control the locking/unlocking mechanism to alternately rotate forward and backward in the following manner:
controlling the locking/unlocking mechanism to alternately rotate forward and backward at a preset torque and a preset rotational speed.

In a preferred technical solution of the above control system for a battery charging and swap station, the control system further includes:
a determining module, where the determining module is configured to: after the locking/unlocking mechanism is controlled to alternately rotate forward and backward, determine whether a preset rotation stopping condition is met.

The control module is further configured to: when the rotation stopping condition is met, control the locking/unlocking mechanism to stop rotation.

In a preferred technical solution of the above control system for a battery charging and swap station, the rotation stopping condition includes at least one of the following conditions:
the internal temperature of the battery charging and swap station is greater than or equal to the preset temperature threshold; or
a battery swap start signal is received.

In a preferred technical solution of the above control system for a battery charging and swap station, the battery charging and swap station further includes a centering apparatus. The centering apparatus is configured to be capable of performing a centering operation on a vehicle with a battery to be swapped.

The obtaining module is further configured to: after the internal temperature is less than the preset temperature threshold and the centering apparatus is started, obtain a no-load running torque of the centering apparatus.

The control system further includes:
a threshold modification module, where the threshold modification module is configured to increase a no-load torque alarm threshold depending on the no-load running torque.

In a preferred technical solution of the above control system for a battery charging and swap station, the obtaining module is further configured to obtain a no-load running torque of the centering apparatus in the following manner:
obtaining a plurality of no-load running torques of the centering apparatus after the centering apparatus is started; and

The control system further includes:
a calculation module, where the calculation module is configured to calculate an average torque based on the plurality of no-load running torques.

The comparison module is further configured to compare the average torque with a preset torque threshold.

The threshold modification module is further configured to increase the no-load torque alarm threshold depending on a comparison result.
wherein the preset torque threshold is less than the no-load torque alarm threshold.

In a preferred technical solution of the above control system for a battery charging and swap station, the threshold modification module is further configured to increase the no-load torque alarm threshold depending on a comparison result in the following manner:
if the average torque is greater than or equal to the preset torque threshold, increasing the no-load torque alarm threshold; or
if the average torque is less than the preset torque threshold, maintaining the no-load torque alarm threshold.

In a preferred technical solution of the above control system for a battery charging and swap station, the calculation module is further configured to calculate an average torque based on the plurality of no-load running torques in the following manner:
selecting, from the plurality of no-load running torques, a no-load running torque within a preset time period after the centering apparatus is started; and
calculating the average torque based on the selected no-load running torque.

The disclosure further provides a computer-readable storage medium storing a plurality of program codes, where the program codes are adapted to be loaded and executed by a processor to implement the control method for a battery charging and swap station according to any one of the above technical solutions.

The disclosure further provides a control apparatus, including:
a processor; and
a memory, where the memory is adapted to store a plurality of program codes, and the program codes are adapted to be loaded and executed by the processor to implement the control method for a battery charging and swap station according to any one of the above technical solutions.

The disclosure further provides a battery charging and swap station. The battery charging and swap station includes a battery swap apparatus. The battery swap apparatus includes a locking/unlocking mechanism. The locking/unlocking mechanism is configured to be capable of locking and unlocking a battery locking mechanism through rotation of a locking/unlocking head of the locking/unlocking mechanism. The battery charging and swap station further includes the above control apparatus.

In a preferred technical solution of the disclosure, an internal temperature is compared with a preset temperature threshold, and the locking/unlocking mechanism is controlled, based on a comparison result, to alternately rotate forward and backward, so that the locking/unlocking mechanism can be preheated at a low temperature, thereby ensuring running efficiency of the locking/unlocking mechanism and avoiding frequent false alarm and halt at a low temperature. In addition, the control method can be implemented only by adjusting software without adding any hardware, thereby reducing costs and facilitating automatic running of the battery charging and swap station.

Further, when the internal temperature is less than the preset temperature threshold, the locking/unlocking mechanism is further controlled based on an authentication success signal of a vehicle with a battery to be swapped to alternately rotate forward and backward, so that ineffective preheating for the locking/unlocking mechanism can be reduced, and energy consumption of the battery charging and swap station can be reduced.

Further, when a rotation stopping condition is met, the locking/unlocking mechanism is controlled to stop rotation, so that high-precision preheating can be implemented, and a poor preheating effect caused by insufficient preheating time or a slow battery swap rhythm caused by excessively long preheating time can be avoided.

Further, when the internal temperature is less than the preset temperature threshold, a no-load torque alarm threshold is further adjusted based on a no-load running torque of a centering apparatus. In the disclosure, false alarm and halt of the centering apparatus in a battery swap process can be further reduced, and battery swap efficiency can be further improved.

Further, an average torque is calculated based on a plurality of no-load running torques and compared with a preset torque threshold, so that calculation and comparison precision can be improved.

Further, a no-load running torque within a preset time period after start of the centering apparatus is selected from the plurality of no-load running torques, and the average torque is calculated based on the selected no-load running torque, so that a sudden change torque of the locking/unlocking mechanism during start and/or stop can be filtered out, and calculation precision of the average torque can be improved.

Solution 1. A control method for a battery charging and swap station, where the battery charging and swap station includes a battery swap apparatus, the battery swap apparatus includes a locking/unlocking mechanism, the locking/unlocking mechanism is configured to be capable of locking and unlocking a battery locking mechanism through rotation of a locking/unlocking head of the locking/unlocking mechanism, and the control method for a battery charging and swap station includes:
obtaining an internal temperature of the battery charging and swap station;
comparing the internal temperature with a preset temperature threshold; and
controlling, depending on a comparison result, the locking/unlocking mechanism to or not to alternately rotate forward and backward.

Solution 2. The control method for a battery charging and swap station according to solution 1, where the step of "controlling, depending on a comparison result, the locking/unlocking mechanism to or not to alternately rotate forward and backward" further includes:
when the internal temperature is less than the preset temperature threshold, determining whether an authentication success signal of a vehicle with a battery to be swapped is received; and
when the authentication success signal is received, controlling the locking/unlocking mechanism to alternately rotate forward and backward.

Solution 3. The control method for a battery charging and swap station according to solution 2, where the step of "controlling, depending on a comparison result, the locking/unlocking mechanism to or not to alternately rotate forward and backward" further includes:
when the internal temperature is greater than or equal to the preset temperature threshold, or when the internal temperature is less than the preset temperature threshold and the authentication success signal is not received, controlling the locking/unlocking mechanism to keep a current state.

Solution 4. The control method for a battery charging and swap station according to solution 1, where the step of "controlling the locking/unlocking mechanism to alternately rotate forward and backward" further includes:
controlling the locking/unlocking mechanism to alternately rotate forward and backward at a preset torque and a preset rotational speed.

Solution 5. The control method for a battery charging and swap station according to solution 2, where after the step of "controlling the locking/unlocking mechanism to alternately rotate forward and backward", the control method further includes:
determining whether a preset rotation stopping condition is met; and
when the rotation stopping condition is met, controlling the locking/unlocking mechanism to stop rotation.

Solution 6. The control method for a battery charging and swap station according to solution 5, where the rotation stopping condition comprises at least one of the following conditions:
the internal temperature of the battery charging and swap station is greater than or equal to the preset temperature threshold; or
a battery swap start signal is received.

Solution 7. The control method for a battery charging and swap station according to solution 1, where the battery charging and swap station further includes a centering apparatus, the centering apparatus is configured to be capable of performing a centering operation on a vehicle with a battery to be swapped, and the control method further includes:
after the internal temperature is less than the preset temperature threshold and the centering apparatus is started, obtaining a no-load running torque of the centering apparatus; and
increasing a no-load torque alarm threshold depending on the no-load running torque.

Solution 8. The control method for a battery charging and swap station according to solution 7, where the step of "obtaining a no-load running torque of the centering apparatus" further comprises:
obtaining a plurality of no-load running torques of the centering apparatus after the centering apparatus is started; and
the step of "increasing a no-load torque alarm threshold depending on the no-load running torque" further comprises:
calculating an average torque based on the plurality of no-load running torques;
comparing the average torque with a preset torque threshold; and
increasing the no-load torque alarm threshold depending on a comparison result,
wherein the preset torque threshold is less than the no-load torque alarm threshold.

Solution 9. The control method for a battery charging and swap station according to solution 8, where the step of "increasing the no-load torque alarm threshold depending on a comparison result" further comprises:
if the average torque is greater than or equal to the preset torque threshold, increasing the no-load torque alarm threshold; or
if the average torque is less than the preset torque threshold, maintaining the no-load torque alarm threshold.

Solution 10. The control method for a battery charging and swap station according to solution 8, where the step of "calculating an average torque based on the plurality of no-load running torques" further comprises:
selecting, from the plurality of no-load running torques, a no-load running torque within a preset time period after the centering apparatus is started; and
calculating the average torque based on the selected no-load running torque.

Solution 11. A control system for a battery charging and swap station, where the battery charging and swap station includes a battery swap apparatus, the battery swap apparatus includes a locking/unlocking mechanism, the locking/unlocking mechanism is configured to be capable of locking and unlocking a battery locking mechanism through rotation of a locking/unlocking head of the locking/unlocking mechanism, and the control system for a battery charging and swap station includes:
an obtaining module, where the obtaining module is configured to obtain an internal temperature of the battery charging and swap station;
a comparison module, where the comparison module is configured to compare the internal temperature with a preset temperature threshold; and
a control module, where the control module is configured to control, depending on a comparison result, the locking/unlocking mechanism to or not to alternately rotate forward and backward.

Solution 12. The control system for a battery charging and swap station according to solution 11, where the control module is further configured to control, depending on a comparison result, the locking/unlocking mechanism to or not to alternately rotate forward and backward in the following manner:
when the internal temperature is less than the preset temperature threshold, determining whether an authentication success signal of a vehicle with a battery to be swapped is received; and
when the authentication success signal is received, controlling the locking/unlocking mechanism to alternately rotate forward and backward.

Solution 13. The control system for a battery charging and swap station according to solution 12, where the control module is further configured to control, depending on a comparison result, the locking/unlocking mechanism to or not to alternately rotate forward and backward in the following manner:
when the internal temperature is greater than or equal to the preset temperature threshold, or when the internal temperature is less than the preset temperature threshold and the authentication success signal is not received, controlling the locking/unlocking mechanism to keep a current state.

Solution 14. The control system for a battery charging and swap station according to solution 11, where the control module is further configured to control the locking/unlocking mechanism to alternately rotate forward and backward in the following manner:
controlling the locking/unlocking mechanism to alternately rotate forward and backward at a preset torque and a preset rotational speed.

Solution 15. The control system for a battery charging and swap station according to solution 12, where the control system further includes:
a determining module, where the determining module is configured to: after the locking/unlocking mechanism is controlled to alternately rotate forward and backward, determine whether a preset rotation stopping condition is met; and
the control module is further configured to: when the rotation stopping condition is met, control the locking/unlocking mechanism to stop rotation.

Solution 16. The control system for a battery charging and swap station according to solution 15, where the rotation stopping condition comprises at least one of the following conditions:
the internal temperature of the battery charging and swap station is greater than or equal to the preset temperature threshold; or
a battery swap start signal is received.

Solution 17. The control system for a battery charging and swap station according to solution 11, where the battery charging and swap station further includes a centering apparatus, and the centering apparatus is configured to be capable of performing a centering operation on a vehicle with a battery to be swapped;
the obtaining module is further configured to: after the internal temperature is less than the preset temperature threshold and the centering apparatus is started, obtain a no-load running torque of the centering apparatus; and
the control system further includes:
   a threshold modification module, where the threshold modification module is configured to increase a no-load torque alarm threshold depending on the no-load running torque.

Solution 18. The control system for a battery charging and swap station according to solution 17, where the obtaining module is further configured to obtain a no-load running torque of the centering apparatus in the following manner:
obtaining a plurality of no-load running torques of the centering apparatus after the centering apparatus is started; and
the control system further includes:
   a calculation module, where the calculation module is configured to calculate an average torque based on the plurality of no-load running torques;
   the comparison module is further configured to compare the average torque with a preset torque threshold; and
   the threshold modification module is further configured to increase the no-load torque alarm threshold depending on a comparison result, where
   wherein the preset torque threshold is less than the no-load torque alarm threshold.

Solution 19. The control system for a battery charging and swap station according to solution 18, where the threshold modification module is further configured to increase the no-load torque alarm threshold depending on a comparison result in the following manner:
if the average torque is greater than or equal to the preset torque threshold, increasing the no-load torque alarm threshold; or
if the average torque is less than the preset torque threshold, maintaining the no-load torque alarm threshold.

Solution 20. The control system for a battery charging and swap station according to solution 18, where the calculation module is further configured to calculate an average torque based on the plurality of no-load running torques in the following manner:
selecting, from the plurality of no-load running torques, a no-load running torque within a preset time period after the centering apparatus is started; and
calculating the average torque based on the selected no-load running torque.

Solution 21. A computer-readable storage medium, storing a plurality of program codes, where the program codes are adapted to be loaded and executed by a processor to perform the control method for a battery charging and swap station according to any one of solutions 1 to 10.

Solution 22: A control apparatus, including:
a processor; and
a memory, where the memory is adapted to store a plurality of program codes, and the program codes are adapted to be loaded and executed by the processor to implement the control method for a battery charging and swap station according to any one of solutions 1 to 10.

Solution 23. A battery charging and swap station, where the battery charging and swap station includes a battery swap apparatus, the battery swap apparatus includes a locking/unlocking mechanism, the locking/unlocking mechanism is configured to be capable of locking and unlocking a battery locking mechanism through rotation of a locking/unlocking head of the locking/unlocking mechanism, and the battery charging and swap station further includes the control apparatus according to solution 22.

### Brief Description of the Drawings

A control method and system for a battery charging and swap station, a medium, an apparatus, and a battery charging and swap station in the disclosure will be described below with reference to the accompanying drawings. In the accompanying drawings:
FIG. 1 is a top view of a parking platform of a battery charging and swap station according to the disclosure;
FIG. 2 is an assembly diagram of a battery swap apparatus according to the disclosure;
FIG. 3 is a flowchart of a control method for a battery charging and swap station according to the disclosure;
FIG. 4 is a flowchart of another implementation of a control method for a battery charging and swap station according to the disclosure;
FIG. 5 is a logic diagram of a control method for a battery charging and swap station according to the disclosure;
FIG. 6 is a logic diagram of another implementation of a control method for a battery charging and swap station according to the disclosure; and
FIG. 7 is a system diagram of a control system for a battery charging and swap station according to the disclosure.

### List of reference numerals

1. Parking platform; 2. Roller apparatus; 3. Centering apparatus; 4. Battery swap apparatus; 41. Battery bearing platform; 42. Locking/unlocking mechanism;

100. Control system for a battery charging and swap station; 110. Obtaining module; 120. Comparison module; 130. Control module; 140. Determining module; 150. Threshold modification module; 160. Calculation module.

### Detailed Description of Embodiments

Preferred embodiments of the disclosure are described below with reference to the accompanying drawings. Those skilled in the art should understand that these embodiments are only used to explain the technical principles of the disclosure, and are not intended to limit the scope of protection of the disclosure.

It should be noted that in the description of the disclosure, the terms, such as "upper", "lower", "vertical", and "horizontal", that indicate directions or positional relationships, are based on the directions or positional relationships shown in the accompanying drawings only for convenience of description, do not indicate or imply that the apparatus or element must have a specific orientation or be constructed and operated in a specific orientation, and therefore cannot be construed as limitation to the disclosure. In addition, the terms "first" and "second" are used for descriptive purposes only, and cannot be construed as indicating or implying relative importance.

In addition, it should also be noted that, in the description of the disclosure, the term "connect" should be interpreted in a broad sense unless explicitly defined and limited otherwise, which, for example, may be a fixed connection, a detachable connection or an integral connection; or may mean a mechanical connection or an electrical connection; or may be a direct connection, or an indirect connection by means of an intermediate medium. For those skilled in the art, the specific meaning of the above-mentioned terms in the disclosure can be interpreted according to the specific situation.

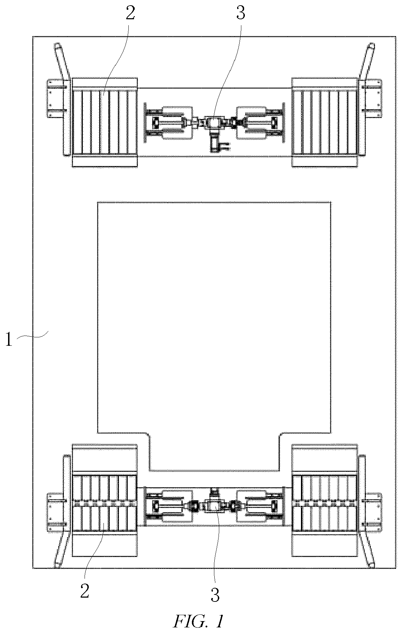

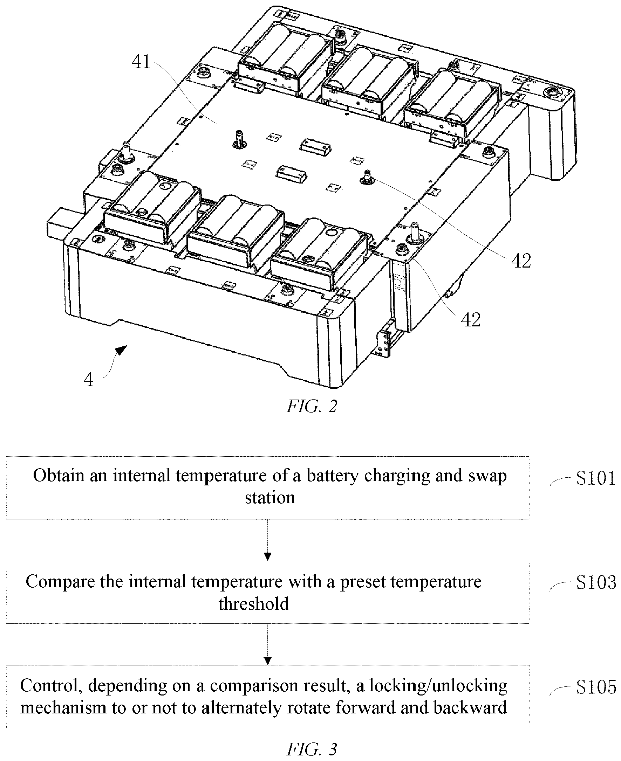

First, a battery charging and swap station in the disclosure is described with reference to FIG. 1 and FIG. 2. FIG. 1 is a top view of a parking platform of a battery charging and swap station according to the disclosure. FIG. 2 is an assembly diagram of a battery swap apparatus according to the disclosure.

As shown in FIG. 1 and FIG. 2, in an implementation, the battery charging and swap station includes a parking platform 1, a centering apparatus 3, and a battery swap apparatus 4.

The parking platform 1 is built from metal frames and metal plates. One end (namely, a lower end shown in FIG. 1) of the parking platform in a length direction (namely, a vertical direction in FIG. 1) is an entrance, at which a gate for a vehicle to enter and exit is provided for the battery charging and swap station. The other end (namely, an upper end shown in FIG. 1) of the parking platform 1 in the length direction forms a closed end with the battery charging and swap station. Positions close to two ends of the parking platform 1 are each provided with two roller apparatuses 2 for supporting wheels. The two roller apparatuses 2 close to a same end of the parking platform 1 are disposed in a width direction (namely, a horizontal direction in FIG. 1) of the parking platform 1. When a vehicle with a battery to be swapped is driven to the parking platform 1, front and rear wheels are respectively supported and positioned by the roller apparatuses 2, so that the vehicle is positioned in the length direction. There is a specific gap between the parking platform 1 and the ground, which allows the battery swap apparatus 4 to bear a traction battery to enter or exit.

The centering apparatus 3 of the vehicle includes wheel push rods. There are four wheel push rods. Every two wheel push rods form a group and are driven by a first drive mechanism to run. The first drive mechanism may include a servo motor and two lead screw nut assemblies. The servo motor is in drive connection with lead screws in both the lead screw nut assemblies. A nut in each lead screw nut assembly is connected to one wheel push rod. In the disclosure, the four wheel push rods are respectively disposed at the four roller apparatuses 2, and can reciprocate in the width direction of the parking platform 1. Each wheel push rod pushes one vehicle wheel outward from an inner side of the vehicle wheel. Under the joint action of the four wheel push rods, the vehicle can be centered and positioned.

As shown in FIG. 2, the battery swap apparatus 4 includes a battery bearing platform 41, a lifting mechanism (not shown in the figure), and a plurality of locking/unlocking mechanisms 42. The battery bearing platform 41 is configured to bear a battery. The lifting mechanism is configured to drive the battery bearing platform 41 to rise and fall. The locking/unlocking mechanism 42 is configured to perform locking and unlocking operations on the battery. Specifically, the lifting mechanism may be a scissor lift. The battery bearing platform 41 is connected to the scissor lift. The scissor lift drives the battery bearing platform 41 to rise and fall, so that the battery bearing platform 41 approaches or leaves a chassis of the vehicle. The battery is fixedly connected to the chassis of the vehicle through a battery locking mechanism. The locking/unlocking mechanism 42 is fixedly disposed on the battery bearing platform 41, and includes a second drive mechanism and a locking/unlocking head. The second drive mechanism drives the locking/unlocking head to perform locking and unlocking operations on the battery locking mechanism, so that the battery is mounted and demounted. The second drive mechanism includes a servo motor and a decelerator. The servo motor is in drive connection with the decelerator. The decelerator is in drive connection with the locking/unlocking head. In the battery swap apparatus 4 shown in FIG. 2, there are ten locking/unlocking mechanisms 42. There are eight on a periphery of the battery bearing platform 41 and two at the center of the battery bearing platform 41.

To implement a control method described below, the battery charging and swap station in the disclosure is further provided with an upper computer and a lower computer. The upper computer is communicatively connected to the lower computer, and is configured to send instructions to the lower computer. The lower computer is communicatively connected to the centering apparatus 3 and the battery swap apparatus 4, and is configured to control the centering apparatus 3 and the battery swap apparatus 4 to act. In an implementation, the upper computer may be an existing main control system in the battery charging and swap station, and the lower computer may be a PLC. Certainly, those skilled in the art may alternatively select a specific configuration manner of the upper computer and the lower computer based on a specific application scenario. For example, the upper computer and the lower computer may alternatively be a controller specially used for performing the method in the disclosure, or may be a functional module or a functional unit of a general purpose controller.

A temperature sensor is further provided in the battery charging and swap station. The temperature sensor is communicatively connected to the upper computer, so that the upper computer can obtain in real time a temperature value in the battery charging and swap station that is uploaded by the temperature sensor.

Certainly, the configuration manner of the battery charging and swap station in the prior art is not limited thereto. The above embodiment is merely an example for description, and is not used to limit the protection scope of the disclosure. Those skilled in the art may use the disclosure in another scenario of the battery charging and swap station without changing the principle of the disclosure. For example, those skilled in the art may change a specific configuration manner and the like of the battery swap apparatus 4, the roller apparatus 2, and the centering apparatus 3.

A control method for a battery charging and swap station according to the disclosure is described below with reference to FIG. 3. FIG. 3 is a flowchart of a control method for a battery charging and swap station according to the disclosure.

As shown in FIG. 3, to solve the problem that a battery charging and swap station is prone to false alarm and halt at a low temperature, the control method for a battery charging and swap station in the disclosure includes the following steps.

S101: Obtain an internal temperature of the battery charging and swap station. For example, after the control method starts to be performed, an upper computer obtains in real time a temperature uploaded by a temperature sensor, and uses the temperature as the internal temperature for the following step. After that, the upper computer uses the temperature uploaded by the temperature sensor as the internal temperature every 5 minutes for the following step.

S 103: Compare the internal temperature with a preset temperature threshold. For example, the preset temperature threshold is determined by experiments or experience. After the internal temperature is obtained, the internal temperature is compared with the preset temperature threshold in a difference or ratio manner.

S 105: Control, depending on a comparison result, a locking/unlocking mechanism to or not to alternately rotate forward and backward. For example, when the internal temperature is less than the preset temperature threshold, it indicates that a current temperature in the battery charging and swap station is low and affects a running effect of the locking/unlocking mechanism. In this case, the locking/unlocking mechanism is controlled to alternately rotate forward and backward, so that the locking/unlocking mechanism is preheated. Otherwise, when the internal temperature is greater than or equal to the preset temperature threshold, it indicates that a current temperature in the battery charging and swap station is high, and the locking/unlocking mechanism has a stable running effect. In this case, the locking/unlocking mechanism does not need to be preheated, and the locking/unlocking mechanism is controlled to keep a current state.

In the prior art, when the battery charging and swap station performs a battery swap on a vehicle with a battery to be swapped in a low-temperature environment, the locking/unlocking mechanism gives an alarm "the locking/unlocking head gets stuck". The inventor learned through repeated research and analysis that the alarm is caused by an excessively large no-load running torque (namely, a no-load running torque that is of a servo motor for driving the locking/unlocking head and that may, for example, be obtained through calculation based on an output current of the servo motor) of the locking/unlocking head. In an unlocking process, the battery locking mechanism and the locking/unlocking head are prone to reaching a preset locking/unlocking head alarm threshold and therefore giving an alarm. In the disclosure, the internal temperature is compared with the preset temperature threshold, and the locking/unlocking mechanism is controlled, based on a comparison result, to alternately rotate forward and backward, so that the locking/unlocking mechanism can be preheated at a low temperature, thereby ensuring running efficiency of the locking/unlocking mechanism and avoiding frequent false alarm and halt at a low temperature. In addition, the control method can be implemented only by adjusting software without adding any hardware, thereby reducing costs and facilitating automatic running of the battery charging and swap station.

Preferred embodiments of the disclosure are described below.

In an embodiment, S 105 further includes: when the internal temperature is less than the preset temperature threshold, determining whether an authentication success signal of a vehicle with a battery to be swapped is received; and when the authentication success signal is received, controlling the locking/unlocking mechanism to alternately rotate forward and backward; or when the internal temperature is greater than or equal to the preset temperature threshold, or when the internal temperature is less than the preset temperature threshold and the authentication success signal is not received, controlling the locking/unlocking mechanism to keep a current state.

Specifically, the preset temperature threshold may be any value from 13°C to 17°C. In the disclosure, 15°C is used as an example. When the internal temperature obtained by the upper computer is less than 15°C, the internal temperature of the battery charging and swap station is low, so that the locking/unlocking mechanism needs to be preheated. In this case, whether the authentication success signal is received is further determined, to determine whether the vehicle with a battery to be swapped meets a battery swap condition. The authentication success signal refers to a signal that indicates an authentication success and that is received by the upper computer of the battery charging and swap station when authentication succeeds in a mutual authentication process of the vehicle with a battery to be swapped and the battery charging and swap station before a battery swap. When determining that the internal temperature is less than 15°C and the authentication success signal is received, the upper computer sends a preheating signal to a lower computer. After receiving the preheating signal, the lower computer controls the locking/unlocking mechanism to alternately rotate forward and backward, so that the locking/unlocking mechanism is preheated. Otherwise, when the internal temperature is greater than or equal to 15°C, or when the internal temperature is less than 15°C and authentication of the vehicle does not succeed, it indicates that the locking/unlocking mechanism does not need to be preheated. In this case, the upper computer does not need to send a preheating signal to a lower computer. The locking/unlocking mechanism keeps a current state. In other words, the locking/unlocking mechanism keeps a running stop state.

When the internal temperature is less than the preset temperature threshold, the locking/unlocking mechanism is further controlled based on the authentication success signal of the vehicle with a battery to be swapped to alternately rotate forward and backward, so that ineffective preheating for the locking/unlocking mechanism can be reduced, and energy consumption of the battery charging and swap station can be reduced.

Certainly, those skilled in the art may alternatively adjust a preheating condition based on a specific application scenario, so that adaptability of the control method in the disclosure is improved. For example, whether the authentication signal is received may not be determined, and preheating of the locking/unlocking mechanism is controlled only through comparison between the internal temperature and the preset temperature threshold.

In an embodiment, the step of "controlling the locking/unlocking mechanism to alternately rotate forward and backward" further includes: controlling the locking/unlocking mechanism to alternately rotate forward and backward at a preset torque and a preset rotational speed.

Specifically, control on the servo motor of the locking/unlocking mechanism generally includes position control, torque control, and rotational speed control. The torque control and the rotational speed control are used in the disclosure. In addition, a torque and a rotational speed of the servo motor of each locking/unlocking mechanism are set, to control the locking/unlocking mechanism to alternately rotate forward and backward. For example, the preset torque may be any value between 30% and 40% of a rated idling torque of the servo motor, and the rotational speed may be any value between 400 r/min and 600 r/min. For example, in the disclosure, the locking/unlocking head may be controlled to alternately rotate one circle forward and one circle backward at 35% of the rated idling torque of the servo motor and 500 r/min.

Certainly, those skilled in the art may alternatively select another control manner based on a specific application scenario, provided that the locking/unlocking mechanism can alternately rotate forward and backward.

In an embodiment, after the step of "controlling the locking/unlocking mechanism to alternately rotate forward and backward", the control method further includes: determining whether a preset rotation stopping condition is met; and when the rotation stopping condition is met, controlling the locking/unlocking mechanism to stop rotation. Specifically, the rotation stopping condition includes: the internal temperature of the battery charging and swap station is greater than or equal to the preset temperature threshold; or a battery swap start signal is received.

For example, the preset temperature threshold is still 15°C. In the preheating process, the internal temperature is continuously obtained. When the internal temperature is greater than or equal to 15°C, it indicates that the locking/unlocking mechanism is currently within an appropriate temperature range and an operation effect of the locking/unlocking mechanism is slightly affected by the temperature. In this case, there is no need to continue to preheat the locking/unlocking mechanism.

In the disclosure, the battery swap start signal may be a process signal, for example, a centering completion signal of a centering apparatus, received by the upper computer before a battery swap apparatus runs. For another example, when the parking platform is provided with a closable door, the battery swap start signal may be a closing signal of the closable door. For another example, when the parking platform is provided with a hoisting apparatus, the battery swap start signal may be a hoist in-place signal of the hoisting apparatus. When the closable door is opened, a battery bearing platform of the battery swap apparatus may extend out of the closable door and dock with a chassis of the vehicle with a battery to be swapped, to perform locking and unlocking operations on a battery. The hoisting apparatus is usually configured to hoist the chassis of the vehicle with a battery to be swapped, to level the chassis of the vehicle and reserve a battery swap space for the battery swap apparatus. When the battery swap start signal is received, it indicates that the battery swap apparatus will perform a preset battery swap action soon. There is no need to continue to preheat the locking/unlocking mechanism.

When any one of the above two conditions is met, the locking/unlocking mechanism is controlled to stop rotation, so that preheating of the locking/unlocking mechanism is stopped. Otherwise, when the above two conditions are not met, a current preheating state is kept, and the locking/unlocking mechanism continues to be controlled to alternately rotate forward and backward, so that the locking/unlocking mechanism is preheated.

When the rotation stopping condition is met, the locking/unlocking mechanism is controlled to stop rotation, so that high-precision preheating can be implemented, and a poor preheating effect caused by insufficient preheating time or a slow battery swap rhythm caused by excessively long preheating time can be avoided.

Certainly, only one of the above two conditions may alternatively be used as a determining condition. Those skilled in the art may perform selection based on a specific application scenario.

In an embodiment, the control method further includes: after the internal temperature is less than the preset temperature threshold and the centering apparatus is started, obtaining a no-load running torque of the centering apparatus; and increasing a no-load torque alarm threshold depending on the no-load running torque.

Specifically, in the disclosure, a plurality of no-load running torques of the centering apparatus after start are preferentially obtained. In other words, the no-load running torque of the servo motor for driving wheel push rods is obtained. The torque may, for example, be calculated based on the output current of the servo motor. When the centering apparatus is started to run, the wheel push rods are driven by the driving servo motor to perform no-load running from an initial position to nearby vehicle wheels. Then, the wheel push rods come into contact with the vehicle wheels and push the vehicle wheels to move for centering. In the disclosure, before the wheel push rods come into contact with the vehicle wheels after being started to run, the plurality of no-load running torques of the centering apparatus are obtained. For example, after the wheel push rods are started to run, the no-load running torques are obtained one by one every 10ms.

In an embodiment, the step of "increasing a no-load torque alarm threshold depending on the no-load running torque" further includes: calculating an average torque based on the plurality of no-load running torques; comparing the average torque with a preset torque threshold; and if the average torque is greater than or equal to the preset torque threshold, increasing the no-load torque alarm threshold; or if the average torque is less than the preset torque threshold, maintaining the no-load torque alarm threshold.

Specifically, after the plurality of no-load running torques are obtained, the average torque is calculated based on the no-load running torques. When the servo motor is started and stopped, a sudden change torque is generated. Therefore, in the disclosure, after the plurality of no-load running torques are obtained, a no-load running torque within a preset time period after the start of the centering apparatus is selected from the plurality of no-load running torques, and then the average torque is calculated based on the selected no-load running torque. For example, assuming that the wheel push rods perform no-load running for 2s, obtained no-load running torques may be classified to be stored. No-load running torques before 100ms are removed through filtering. All no-load running torque between 100ms and 2s are selected. Then, an average value of all the selected no-load running torques is calculated to serve as the average torque. For another example, running torques of the wheel push rods may alternatively be obtained continuously until the wheel push rods come into contact with the vehicle wheels and a sudden torque change occurs. Then, no-load running torques within a time period between a start sudden torque change and a contact sudden torque change are intercepted, and an average value is calculated to serve as the average torque. Certainly, the above two interception manners in the preset time period are merely examples. Those skilled in the art may adjust the interception manners based on a specific application scenario, provided that impact caused on a result by the start sudden torque change of the servo motor and the contact sudden torque change of the wheel push rods and tires can be effectively eliminated.

After the average torque is obtained through calculation, the average torque is compared with the preset torque threshold. Whether the no-load torque alarm threshold is adjusted is determined based on a comparison result.

In the prior art, a no-load torque alarm threshold is usually preset. For example, the no-load torque alarm threshold may be associated with a centering torque alarm threshold in a process in which the wheel push rods push the wheels for centering, and the no-load torque alarm threshold is set to 50% of the centering torque alarm threshold. In the disclosure, the preset torque threshold is less than the no-load torque alarm threshold, and may, for example, be 40% of a centering torque alarm threshold. If the calculated average torque described above is greater than or equal to the preset torque threshold, it indicates that the current internal temperature is low and an excessively high no-load running torque of the push rods is prone to causing frequent false alarm. In this case, the no-load torque alarm threshold is increased to avoid frequent false alarm. For example, the no-load torque alarm threshold may be increased to 60% of the centering torque alarm threshold. Otherwise, if the average torque is less than the preset torque threshold, it indicates that the internal temperature is low but a no-load running torque of the push rods is in an appropriate range. In this case, the no-load torque alarm threshold is maintained.

The applicant found through research that during a battery swap of the vehicle with a battery to be swapped in a low-temperature environment, a torque of the push rods during no-load running is prone to exceeding the no-load torque alarm threshold. Once the no-load running torque exceeds the no-load torque alarm threshold, the centering apparatus halts and gives an alarm "The torque is excessively high", and consequently the push rods cannot succeed in positioning. In the disclosure, when the internal temperature is less than the preset temperature threshold, the no-load torque alarm threshold is adjusted based on the no-load running torque of the centering apparatus, so that false alarm and halt of the centering apparatus in a battery swap process can be reduced, and battery swap efficiency can be further improved. The average torque is calculated based on the plurality of no-load running torques and compared with the preset torque threshold, so that calculation and comparison precision can be improved. The no-load running torque within the preset time period after start of the centering apparatus is selected from the plurality of no-load running torques, and the average torque is calculated based on the selected no-load running torque, so that a sudden change torque of the locking/unlocking mechanism during start and/or stop can be filtered out, and calculation precision of the average torque can be improved.

Certainly, the increasing a no-load torque alarm threshold depending on the no-load running torque is merely a preferred embodiment. Those skilled in the art may adjust the above implementation process without departing from the principle of the disclosure. For example, a single running torque in the no-load running process may be obtained to serve as the no-load running torque to be compared with the preset torque threshold for determining. For another example, it is possible not to select some of the plurality of no-load running torques for calculation. For another example, the no-load torque alarm threshold and the preset torque threshold may be set based on an actual situation and does not need to be associated with the centering torque alarm threshold.

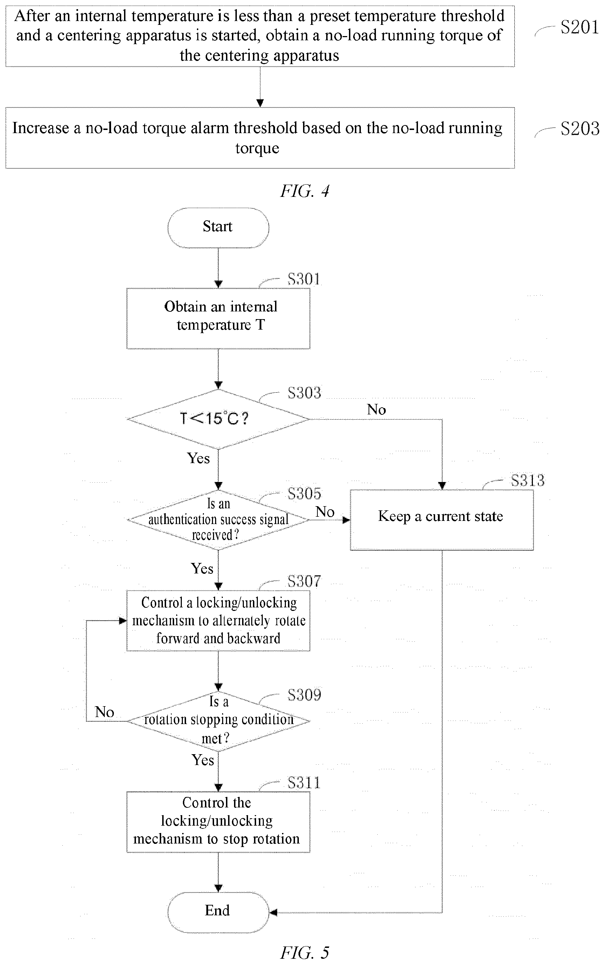

A preheating process of a locking/unlocking apparatus in a possible embodiment is described below with reference to FIG. 5. FIG. 5 is a logic diagram of a control method for a battery charging and swap station according to the disclosure.

As shown in FIG. 5, in a possible embodiment:
S301: An upper computer receives in real time a temperature uploaded by a temperature sensor, and determines the temperature uploaded by the temperature sensor as an internal temperature T every 5 min; and then perform S303.
S303: Determine whether T < 15°C is met; if T < 15°C is met, perform S305; otherwise, if T < 15°C is not met, perform S313.
S305: Determine whether an authentication success signal of a vehicle with a battery to be swapped is received; if the authentication success signal is received, perform S307; otherwise, if the authentication success signal is not received, perform S313.
S307: Set a torque and a rotational speed of each locking/unlocking mechanism and control each locking/unlocking mechanism to alternately rotate forward and backward at the corresponding torque and rotational speed, and then perform S309.
S309: Determine whether an internal temperature T' ≥ 15°C is met or whether a closing signal of a closable door is received; if T' ≥ 15°C is met or the closing signal is received, perform S311; otherwise, if T' ≥ 15°C is not met and the closing signal is not received, return to S307.
S311: Control all the locking/unlocking mechanisms to stop rotation.
S313: Control the locking/unlocking mechanisms to keep a current state.

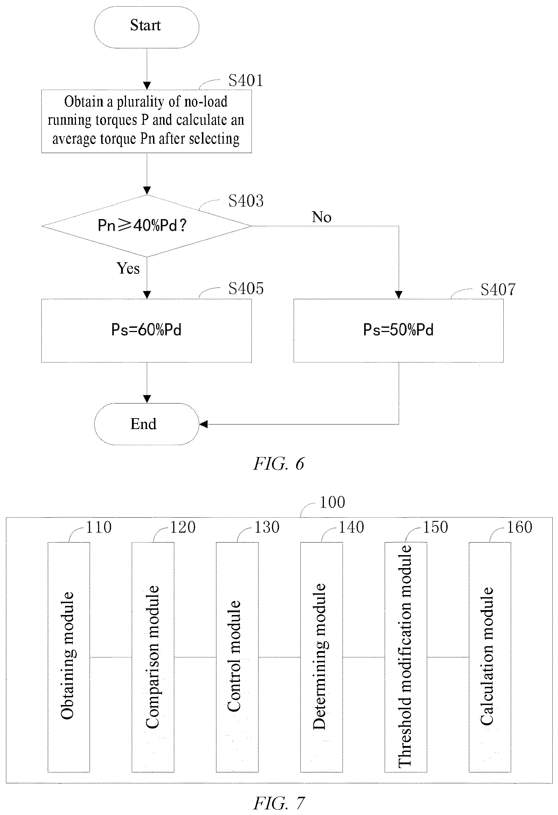

A modification process of a no-load torque alarm threshold of a centering apparatus in a possible embodiment is described below with reference to FIG. 6. FIG. 6 is a logic diagram of another embodiment of a control method for a battery charging and swap station according to the disclosure.

As shown in FIG. 6, in a possible embodiment:
S401: After a centering apparatus is started to run, obtain a plurality of no-load running torques P in a running process of wheel push rods and calculate an average torque Pn after data selecting, and then perform S403.
S403: Determine whether Pn ≥ 40%Pd is met; if Pn ≥ 40%Pd is met, perform S405; otherwise, if Pn ≥ 40%Pd is not met, perform S407. Pd is a centering torque alarm threshold of the wheel push rods.
S405: Adjust the no-load torque alarm threshold until Ps = 60%Pd.
S407: Keep the no-load torque alarm threshold a default value, that is, Ps = 50%Pd.

Although the steps are described in the above order in this embodiment, those skilled in the art may understand that in order to achieve the effects of this embodiment, different steps are not necessarily performed in this order, but can be performed simultaneously (in parallel) or in a reverse order, and these simple variations are within the protection scope of the disclosure.

A control system for a battery charging and swap station according to the disclosure is described below with reference to FIG. 7. FIG. 7 is a system diagram of a control system for a battery charging and swap station according to the disclosure.

As shown in FIG. 7, in the control system 100 for a battery charging and swap station in the disclosure, the battery charging and swap station includes a battery swap apparatus. The battery swap apparatus includes a locking/unlocking mechanism. The locking/unlocking mechanism is configured to be capable of locking and unlocking a battery locking mechanism through rotation of a locking/unlocking head of the locking/unlocking mechanism. The control system 100 for a battery charging and swap station includes: an obtaining module 110, a comparison module 120, and a control module 130. The obtaining module 110 is configured to obtain an internal temperature of the battery charging and swap station. The comparison module 120 is configured to compare the internal temperature with a preset temperature threshold. The control module 130 is configured to control, depending on a comparison result, the locking/unlocking mechanism to or not to alternately rotate forward and backward. In an embodiment, for detailed description of function implementation, reference may be made to the description of S101 to S 105.

In an embodiment, the control module 130 is further configured to control, depending on a comparison result, the locking/unlocking mechanism to or not to alternately rotate forward and backward in the following manner: when the internal temperature is less than the preset temperature threshold, determining whether an authentication success signal of a vehicle with a battery to be swapped is received; and when the authentication success signal is received, controlling the locking/unlocking mechanism to alternately rotate forward and backward. In an embodiment, for detailed description of function implementation, reference may be made to the method steps described above.

In an embodiment, the control module 130 is further configured to control, depending on a comparison result, the locking/unlocking mechanism to or not to alternately rotate forward and backward in the following manner: when the internal temperature is greater than or equal to the preset temperature threshold, or when the internal temperature is less than the preset temperature threshold and the authentication success signal is not received, controlling the locking/unlocking mechanism to keep a current state. In an embodiment, for detailed description of function implementation, reference may be made to the method steps described above.

In an embodiment, the control module 130 is further configured to control the locking/unlocking mechanism to alternately rotate forward and backward in the following manner: controlling the locking/unlocking mechanism to alternately rotate forward and backward at a preset torque and a preset rotational speed. In an embodiment, for detailed description of function implementation, reference may be made to the method steps described above.

In an embodiment, the control system 100 further includes: a determining module 140, where the determining module 140 is configured to: after the locking/unlocking mechanism is controlled to alternately rotate forward and backward, determine whether a preset rotation stopping condition is met. The control module 130 is further configured to: when the rotation stopping condition is met, control the locking/unlocking mechanism to stop rotation. In an embodiment, for detailed description of function implementation, reference may be made to the method steps described above.

In an embodiment, the rotation stopping condition includes at least one of the following conditions: the internal temperature of the battery charging and swap station is greater than or equal to the preset temperature threshold; or a battery swap start signal is received. In an embodiment, for detailed description of function implementation, reference may be made to the method steps described above.

In an embodiment, the battery charging and swap station further includes a centering apparatus. The centering apparatus is configured to be capable of performing a centering operation on a vehicle with a battery to be swapped. The obtaining module 110 is further configured to: after the internal temperature is less than the preset temperature threshold and the centering apparatus is started, obtain a no-load running torque of the centering apparatus. The control system 100 further includes: a threshold modification module 150, where the threshold modification module 150 is configured to increase a no-load torque alarm threshold depending on the no-load running torque. In an embodiment, for detailed description of function implementation, reference may be made to the method steps described above.

In an embodiment, the obtaining module 110 is further configured to obtain a no-load running torque of the centering apparatus in the following manner: obtaining a plurality of no-load running torques of the centering apparatus after start. The control system 100 further includes: a calculation module 160, where the calculation module 160 is configured to calculate an average torque based on the plurality of no-load running torques. The comparison module 120 is further configured to compare the average torque with a preset torque threshold. The threshold modification module 150 is further configured to increase the no-load torque alarm threshold depending on a comparison result. The preset torque threshold is less than the no-load torque alarm threshold. In an embodiment, for detailed description of function implementation, reference may be made to the method steps described above.

In an embodiment, the threshold modification module 150 is further configured to increase the no-load torque alarm threshold depending on a comparison result in the following manner: if the average torque is greater than or equal to the preset torque threshold, increasing the no-load torque alarm threshold; or if the average torque is less than the preset torque threshold, maintaining the no-load torque alarm threshold. In an embodiment, for detailed description of function implementation, reference may be made to the method steps described above.

In an embodiment, the calculation module 160 is further configured to calculate an average torque based on the plurality of no-load running torques in the following manner: selecting a no-load running torque within a preset time period after the start of the centering apparatus from the plurality of no-load running torques; and calculating the average torque based on the selected no-load running torque. In an embodiment, for detailed description of function implementation, reference may be made to the method steps described above.

It should be noted that the safety protection system for a battery charging and swap station provided in the above embodiments is merely illustrated by the division of the above functional modules (such as the obtaining module 110, the comparison module 120, the control module 130, the determining module 140, the threshold modification module, and the calculation module 160). During practical application, the above functional modules may be implemented by using different functional units based on a requirement. In other words, the functional modules in the embodiments are further split or combined. For example, the functional modules in the above embodiments may be combined into one functional module, or may be further split into a plurality of sub-modules to complete all or some of the functions described above. The names of the functional modules involved in the embodiments are merely for distinguishing purpose and are not to be construed as limiting the disclosure.

Those skilled in the art can understand that all or some of the procedures in the method of the above embodiments of the disclosure may also be implemented by a computer program instructing relevant hardware. The computer program may be stored in a computer-readable storage medium, and when the computer program is executed by a processor, the steps of the above method embodiments can be implemented. The computer program includes computer program code. The computer program code may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electrical carrier signal, a telecommunications signal, and a software distribution medium. It should be noted that the content included in the computer-readable storage medium can be appropriately added or deleted depending on requirements of the legislation and patent practice in a jurisdiction. For example, in some jurisdictions, according to the legislation and patent practice, the computer-readable storage medium does not include an electrical carrier signal and a telecommunications signal.

Various embodiments regarding components in the disclosure may be implemented in hardware, or implemented by software modules running on one or more processors, or implemented in combinations thereof. Those skilled in the art should understand that a microprocessor or a digital signal processor (DSP) may be used in practice to implement some or all of the functions of some or all of the components in the server and client according to the embodiments of the disclosure. The disclosure may alternatively be implemented as devices or device programs (for example, PC programs and PC program products) for performing some or all of the methods as described herein. Such programs for implementing the disclosure may be stored on a PC readable medium, or may be in the form of one or more signals. Such signals may be obtained by downloading from an Internet website, or provided on a carrier signal, or provided in any other form.

The disclosure further provides a computer-readable storage medium. In an embodiment of the computer-readable storage medium according to the disclosure, the computer-readable storage medium may be configured to store a program for performing the control method for a battery charging and swap station in the above method embodiment, and the program may be loaded and executed by a processor to implement the above control method for a battery charging and swap station. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

The disclosure further provides a control apparatus. In an embodiment of the control apparatus according to the disclosure, the control apparatus includes a processor and a memory. The memory may be configured to store a program for performing the control method for a battery charging and swap station in the above method embodiment, and the processor may be configured to execute the program in the memory. The program includes, but is not limited to, the program for performing the control method for a battery charging and swap station in the above method embodiment. For ease of description, only parts related to the embodiments of the disclosure are shown. For specific technical details that are not disclosed, reference may be made to the method part of the embodiments of the disclosure. The control apparatus may be an apparatus device formed by various electronic devices.

The disclosure further provides a battery charging and swap station. The battery charging and swap station includes a battery swap apparatus. The battery swap apparatus includes a locking/unlocking mechanism. The locking/unlocking mechanism is configured to be capable of locking and unlocking a battery locking mechanism through rotation of a locking/unlocking head of the locking/unlocking mechanism. The battery charging and swap station further includes the above control apparatus.

Heretofore, the technical solutions of the disclosure have been described with reference to the preferred implementations shown in the accompanying drawings. However, those skilled in the art can readily understand that the protection scope of the disclosure is apparently not limited to these specific implementations. Those skilled in the art can make equivalent changes or substitutions to the related technical features without departing from the principle of the disclosure, and all the technical solutions with such changes or substitutions shall fall within the protection scope of the disclosure.

## Claims

1. A control method for a battery charging and swap station, wherein the battery charging and swap station comprises a battery swap apparatus, the battery swap apparatus comprises a locking/unlocking mechanism, and the locking/unlocking mechanism is configured to be capable of locking and unlocking a battery locking mechanism through rotation of a locking/unlocking head of the locking/unlocking mechanism, the control method for the battery charging and swap station comprising:
obtaining an internal temperature of the battery charging and swap station;
comparing the internal temperature with a preset temperature threshold; and
controlling, depending on a comparison result, the locking/unlocking mechanism to or not to alternately rotate forward and backward.

2. The control method for the battery charging and swap station according to claim 1, wherein the step of "controlling, depending on a comparison result, the locking/unlocking mechanism to or not to alternately rotate forward and backward" further comprises:
when the internal temperature is less than the preset temperature threshold, determining whether an authentication success signal from a vehicle with a battery to be swapped is received; and
when the authentication success signal is received, controlling the locking/unlocking mechanism to alternately rotate forward and backward.

3. The control method for the battery charging and swap station according to claim 1 or 2, wherein the step of "controlling, depending on a comparison result, the locking/unlocking mechanism to or not to alternately rotate forward and backward" further comprises:
when the internal temperature is greater than or equal to the preset temperature threshold, or when the internal temperature is less than the preset temperature threshold and the authentication success signal is not received, controlling the locking/unlocking mechanism to maintain a current state.

4. The control method for the battery charging and swap station according to any one of claims 1 to 3, wherein the step of "controlling the locking/unlocking mechanism to alternately rotate forward and backward" further comprises:
controlling the locking/unlocking mechanism to alternately rotate forward and backward at a preset torque and a preset rotational speed.

5. The control method for the battery charging and swap station according to any one of claims 2 to 4, wherein after the step of "controlling the locking/unlocking mechanism to alternately rotate forward and backward", the control method further comprises:
determining whether a preset rotation stopping condition is met; and
when the rotation stopping condition is met, controlling the locking/unlocking mechanism to stop rotation.

6. The control method for the battery charging and swap station according to claim 5, wherein the rotation stopping condition comprises at least one of the following conditions:
the internal temperature of the battery charging and swap station is greater than or equal to the preset temperature threshold; or
a battery swap start signal is received.

7. The control method for the battery charging and swap station according to any one of claims 1 to 6, wherein the battery charging and swap station further comprises a centering apparatus configured to be capable of performing a centering operation on a vehicle with a battery to be swapped, and the control method further comprises:
after the internal temperature is less than the preset temperature threshold and the centering apparatus is started, obtaining a no-load running torque of the centering apparatus; and
increasing a no-load torque alarm threshold depending on the no-load running torque.

8. The control method for the battery charging and swap station according to claim 7, wherein the step of "obtaining a no-load running torque of the centering apparatus" further comprises:
obtaining a plurality of no-load running torques of the centering apparatus after the centering apparatus is started; and
the step of "increasing a no-load torque alarm threshold depending on the no-load running torque" further comprises:
calculating an average torque based on the plurality of no-load running torques;
comparing the average torque with a preset torque threshold; and
increasing the no-load torque alarm threshold depending on a comparison result,
wherein the preset torque threshold is less than the no-load torque alarm threshold.

9. The control method for the battery charging and swap station according to claim 8, wherein the step of "increasing the no-load torque alarm threshold depending on a comparison result" further comprises:
if the average torque is greater than or equal to the preset torque threshold, increasing the no-load torque alarm threshold; or
if the average torque is less than the preset torque threshold, maintaining the no-load torque alarm threshold.

10. The control method for the battery charging and swap station according to claim 8 or 9, wherein the step of "calculating an average torque based on the plurality of no-load running torques" further comprises:
selecting, from the plurality of no-load running torques, a no-load running torque within a preset time period after the centering apparatus is started; and
calculating the average torque based on the selected no-load running torque.

11. A control system for a battery charging and swap station, where the battery charging and swap station includes a battery swap apparatus, the battery swap apparatus includes a locking/unlocking mechanism, the locking/unlocking mechanism is configured to be capable of locking and unlocking a battery locking mechanism through rotation of a locking/unlocking head of the locking/unlocking mechanism, and the control system for a battery charging and swap station includes:
an obtaining module, where the obtaining module is configured to obtain an internal temperature of the battery charging and swap station;
a comparison module, where the comparison module is configured to compare the internal temperature with a preset temperature threshold; and
a control module, where the control module is configured to control, depending on a comparison result, the locking/unlocking mechanism to or not to alternately rotate forward and backward.

12. The control system for a battery charging and swap station according to claim 11, where the control module is further configured to control, depending on a comparison result, the locking/unlocking mechanism to or not to alternately rotate forward and backward in the following manner:
when the internal temperature is less than the preset temperature threshold, determining whether an authentication success signal of a vehicle with a battery to be swapped is received; and
when the authentication success signal is received, controlling the locking/unlocking mechanism to alternately rotate forward and backward.

13. The control system for a battery charging and swap station according to claim 11 or 12, where the control module is further configured to control, depending on a comparison result, the locking/unlocking mechanism to or not to alternately rotate forward and backward in the following manner:
when the internal temperature is greater than or equal to the preset temperature threshold, or when the internal temperature is less than the preset temperature threshold and the authentication success signal is not received, controlling the locking/unlocking mechanism to keep a current state.

14. The control system for a battery charging and swap station according to any one of claims 11 to 13, where the control module is further configured to control the locking/unlocking mechanism to alternately rotate forward and backward in the following manner:
controlling the locking/unlocking mechanism to alternately rotate forward and backward at a preset torque and a preset rotational speed.

15. The control system for a battery charging and swap station according to any one of claims 11 to 14, where the battery charging and swap station further includes a centering apparatus, and the centering apparatus is configured to be capable of performing a centering operation on a vehicle with a battery to be swapped;
the obtaining module is further configured to: after the internal temperature is less than the preset temperature threshold and the centering apparatus is started, obtain a no-load running torque of the centering apparatus; and
the control system further includes:
a threshold modification module, where the threshold modification module is configured to increase a no-load torque alarm threshold depending on the no-load running torque.
